# EUROPEAN PATENT SPECIFICATION

(11) **EP 1 148 969 B1**
(45) Date of publication and mention of the grant of the patent: **24.11.2004**
(21) Application number: 00900280.9
(22) Date of filing: 13.01.2000
(51) Int. Cl.: B23K 37/053

(54) **WELDING MACHINE**
SCHWEISSMASCHINE
SOUDEUSE

(30) Priority: 13.01.1999 GB 9900599
(43) Date of publication of application: 31.10.2001
(73) Proprietor: Meltax GmbH, 6438 Ibach (CH)
(72) Inventor: POWER, Leslie Ernest, Tettenhall, Wolverhampton WV6 8ST (GB); TAYLOR, Reginald, Wednesfield, Wolverhampton WV11 3PX (GB); BRENNAN, Michael Anthony, Meadow Fields, Northampton NN3 NTA (GB)
(74) Representative: Croston, David
(86) International application number: PCT/GB2000/000083
(87) International publication number: WO 2000/041844

(56) References cited:
- GB-A- 2 158 756
- US-A- 3 612 808

## Description

The present invention relates to welding machines and in particular to internal pipe welding machines.

According to the present invention there is provided a pipe welding machine including at least one automatic welder assembly controlled by a control arrangement and a manual welder, the control of at least one of the wire feed speed and welding current of the manual welder being provided by the control arrangement.

A pipe welding machine including at least one automatic welder assembly controlled by a control arrangement is known, see e.g. US-A-3 612 808.

An embodiment of the present invention will now be described by way of example only with reference to the accompanying drawings in which:-
Figures 1-5 are successive composite cross-sectional views of an internal pipe welding machine according to the present invention;
Figure 6 is an enlarged view of the nose cone welded sub-assembly of figure 1;
Figure 7 is an enlarged view of a guide arm of figure 1;
Figure 8 is a partial view in the direction of arrow A of figure 7;
Figure 9 is a view of a wasted bolt: and
Figure 10 is a view in the direction of arrow B of a spacer.

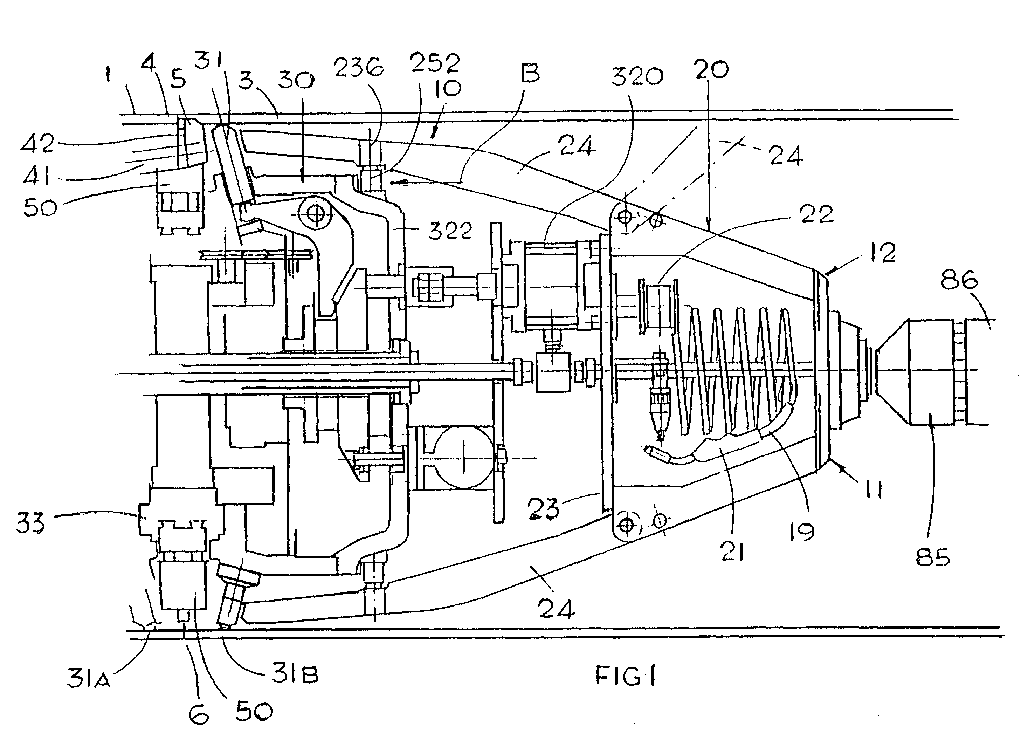

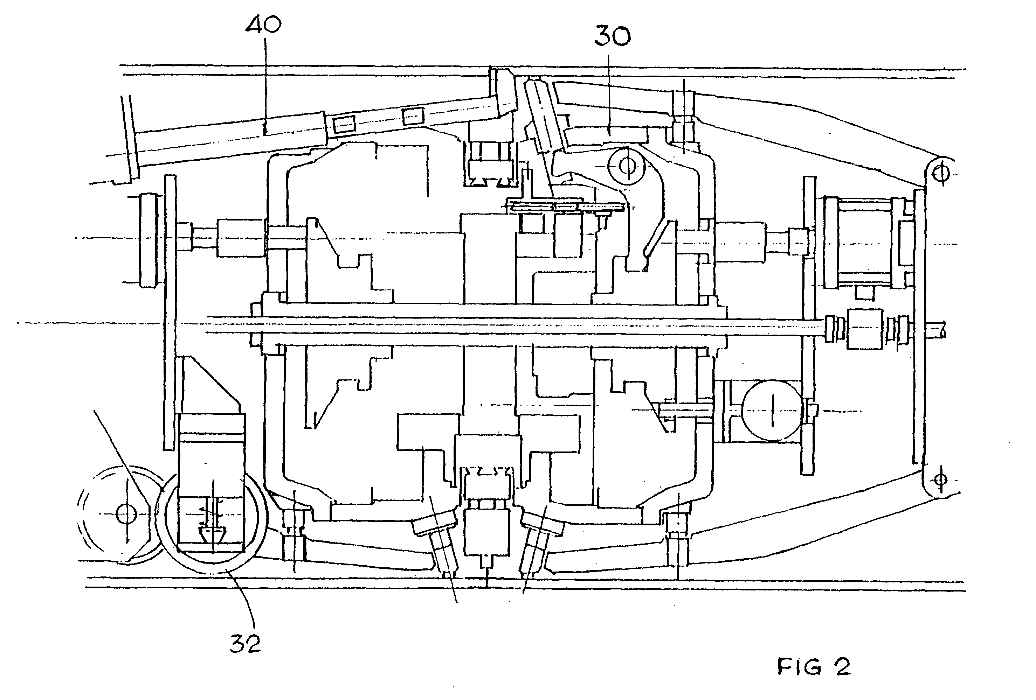

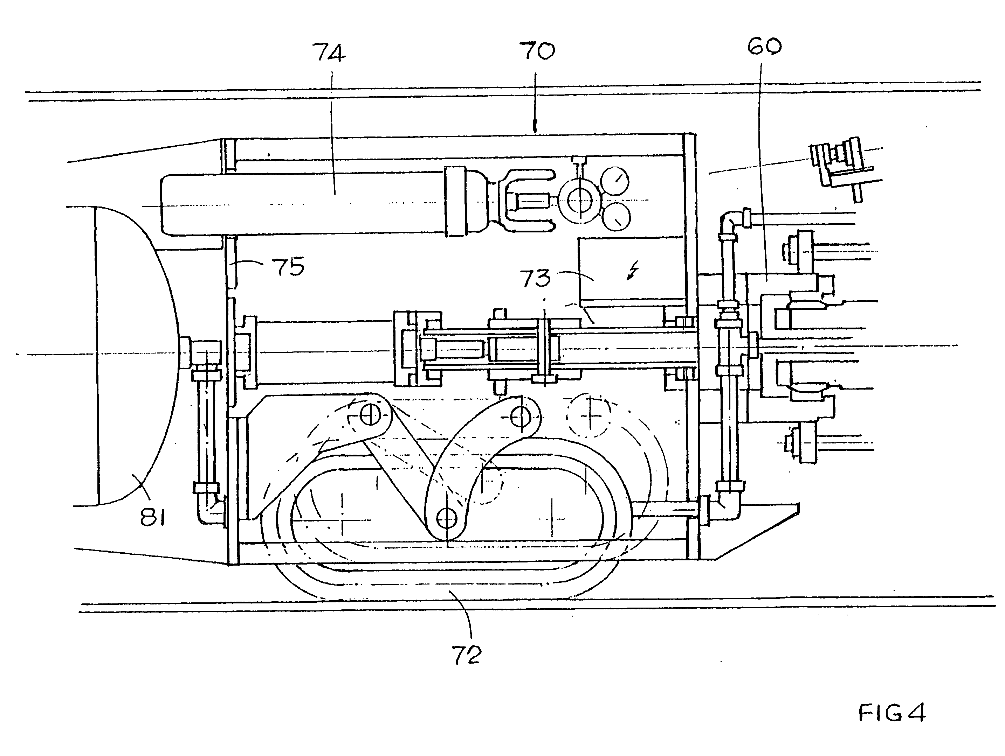

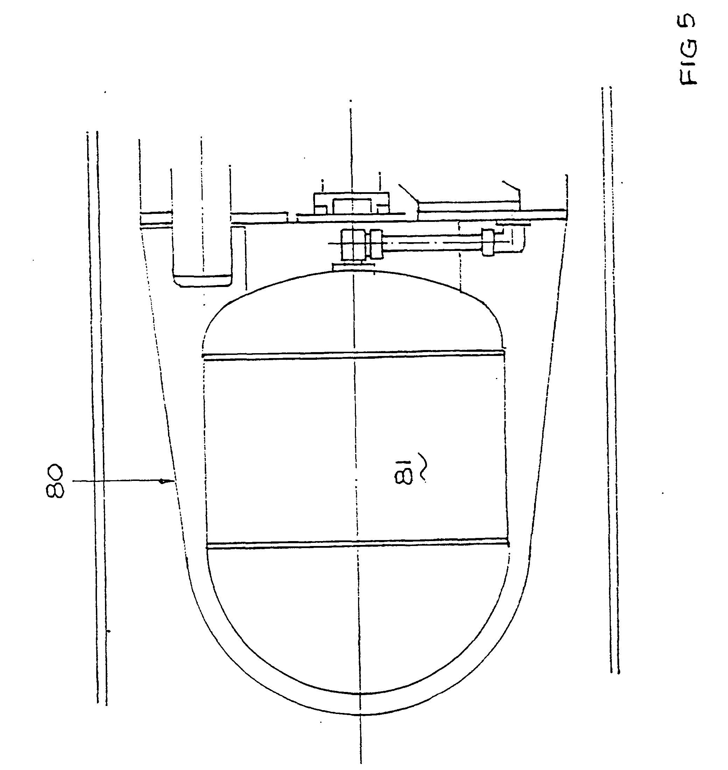

With reference to figures 1-5 there is shown an internal pipe welding machine 10 positioned within a pipeline 1. The pipeline 1 comprises a series of pipes each of which have been welded together to ensure a fluid tight pipeline.

The internal pipe welding machine 10 enables the joint 6 between the end 4 of pipeline 1 and end 5 of adjacent pipe 3 to be welded from the inside. Additionally the joint 6 can be welded from the outside by the use of a separate external pipe welding machine.

The internal pipe welding machine 10 comprises the following major components:-
a) Nose cone assembly 20
b) Thruster assembly 30
c) A plurality of arrester assemblies 40
d) A plurality of automatic welder assemblies 50
e) An articulated joint assembly 60
f) A drive assembly 70
g) An air receiver 80
h) A command rod coupling 85, and
i) A chassis 11

The nose cone assembly 20 includes a manual welder 19 including a welding torch 21 along with a spool of welding wire 22. The nose cone assembly 20 includes a plate 23 to which the thruster assembly 30 is connected. The nose cone assembly also includes a plurality of circumferentially equispaced pivotal guide arms 24 (in this case six) which are also connected to the thruster assembly 30.

Thruster assembly 30 includes a plurality of circumferentially equispaced pipe engaging clamps 31, a pair of guide wheels 32 and a rotatable ring member 33.

Mounted on ring member 33 is a plurality (in this case six) of circumferentially equispaced automatic welder assemblies 50.

A plate 61 of articulated joint assembly 60 is attached to the back of the thruster assembly 40. Attached to plate 61 is a plurality (in this case three) of circumferentially equispaced arrester assemblies 40. Each arrester assembly 40 includes an extendable shaft 41 with a positioning abutment 42 at one end.

The articulated joint assembly 60 allows the front subframe 12 of chassis 11 to articulate relative to the rear subframe 13 of chassis 11 and includes an articulated joint 62 and a plurality (in this case two) of loading wheels 63.

A plate 71 of the drive assembly 70 is attached to the back of the articulated joint assembly 60.

Drive assembly 70 includes a plurality (in this case three) of circumferentially equispaced track laying arrangements 72. Drive assembly 70 also includes 2 batteries 73 and a tank 74 of inert welding shield gas. A plate 75 of the drive assembly 70 is connected to the air receiver assembly 80.

The air receiver assembly 80 includes an air receiver tank 81.
At the front of the nose cone assembly 20 there is positioned a command rod rear coupling 85 which is releasably connected to a command rod 86. Command rod 86 is of a length such that it projects beyond the end of pipe 3 and includes at that end a command rod control panel (not shown) which can be used to control various functions of the machine and a command rod front coupling (not shown) which releasably connects the command rod to a supply of services eg. compressed air, battery charging current and welding current generators. Control signals pass down the command rod, to the machine, along with service supplies such as compressed air, welding current, and welding shield gas.

Once the internal pipe welding machine has completed a weld sequence, continued operation of the machine is as follow:-
1) An operator standing at the open end of the pipeline, ie. at the open end of the pipe that has newly been welded into place, adjacent the command rod control panel disconnects the command rod front coupling from the services and then operates the panel so as to retract the clamps and then start the air motors which in turn drive each track drive 72 so as to advance the machine along the pipeline 1 with the front subframe 12 being carried on guide wheels 32. The air motors are supplied by pressurised air from the air receiver tank 81.
   The machine is advanced, pushing the control rod before it, the control rod being fed into the next pipe to be welded which has previously been located proximate the end of the pipeline. A wall proximity sensor (not shown) moulded on the machine engages the inner wall of the pipe. When the nose cone assembly 20 projects from the open end of the pipeline 1 to such an extent that the proximity sensor no longer engages the wall, the machine is automatically stopped.
2) The operator further advances the machine by operating a machine control panel (not shown), situated within the nose cone assembly and accessable to the operator, such that the automatic welder assemblies 50 project beyond the open end of the pipeline.
3) The extendable shaft 41 of each arrester assembly 40 is then extended and rotated such that the positioning abutment 42 is axially aligned with a weld plane of the welder assemblies 50 and radially aligned with the end of the pipeline.
4) The operator then reverses the machine until the positioning abutments 42 contact the pipeline and prevent further rearward movement of the machine. At this position the weld plane of the automatic welder assemblies is now aligned with the end of the pipeline (see fig 1).
5) The rearmost pipe-engaging clamps 31A are then deployed to clamp the machine securely relative to the pipeline.
6) Each positioning abutment 42 is then rotated about the axis of the extendable shaft 41, and the extendable shaft is then withdrawn such that each positioning abutment lies between two adjacent rear pipe-engaging clamps 31A, clear of the path of the automatic welder assemblies (see below).
7) The section of pipe is then moved such that its end to be welded abuts the end 4 of the pipeline.
8) The operator then deploys the front pipe-engaging clamps 31B by using the command rod control panel.
9) At some convenient time following stage 1) above of the operation of the machine, and prior to welding (see below) the control rod front coupling is reconnected to the supply of services and the air receiver tank 81 can be re-pressurized if necessary.
10) Welding of the joint 6 between the pipe 3 pipeline 1 then occurs in two stages:
   Firstly the automatic welder assemblies positioned at 12 o'clock, 2 o'clock and 4 o'clock (when viewing from the front of the machine) weld the joint 6 whilst the ring member 33 rotates clockwise by approximately 60 degrees to weld one half of the joint 6. It should be noted that the automatic welder assemblies originally positioned at 6 o'clock, 8 o'clock and 10 o'clock are now positioned at 8 o'clock, 10 o'clock and 12 o'clock respectively. These latter automatic welder assemblies are then operated whilst the ring member is rotated sixty degrees anti-clockwise to weld the remaining half of the joint 6.
11) The operator then unclamps the front and rear pipe-engaging clamps via the command rod control panel and the machine can be advanced further along the pipeline to the next weld position.

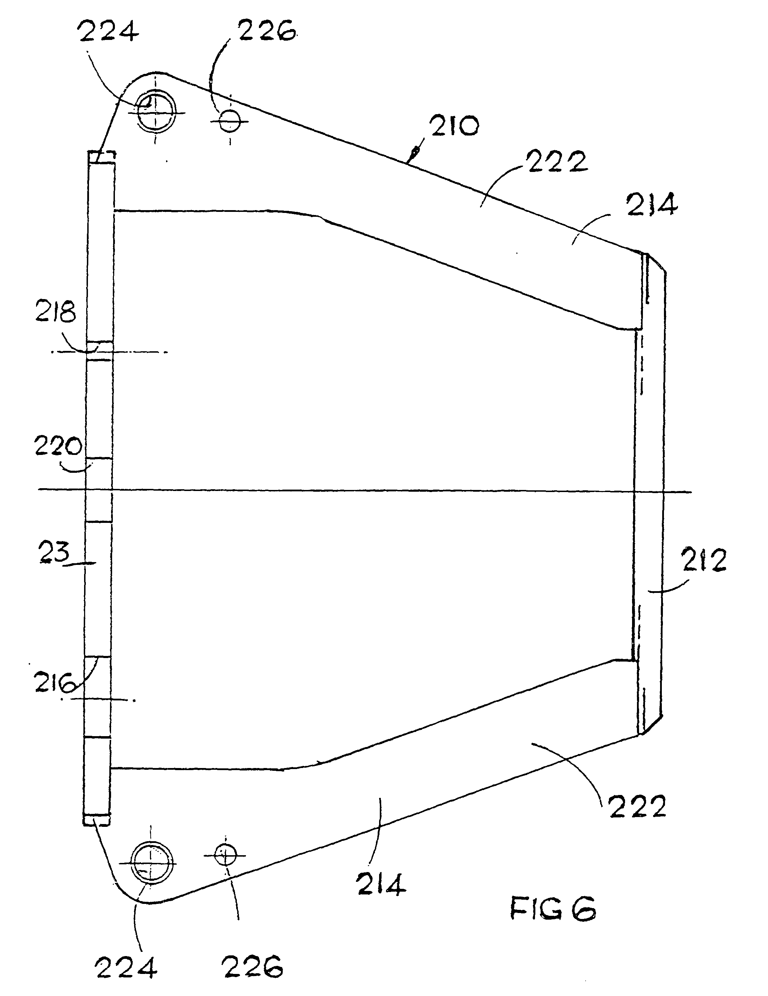

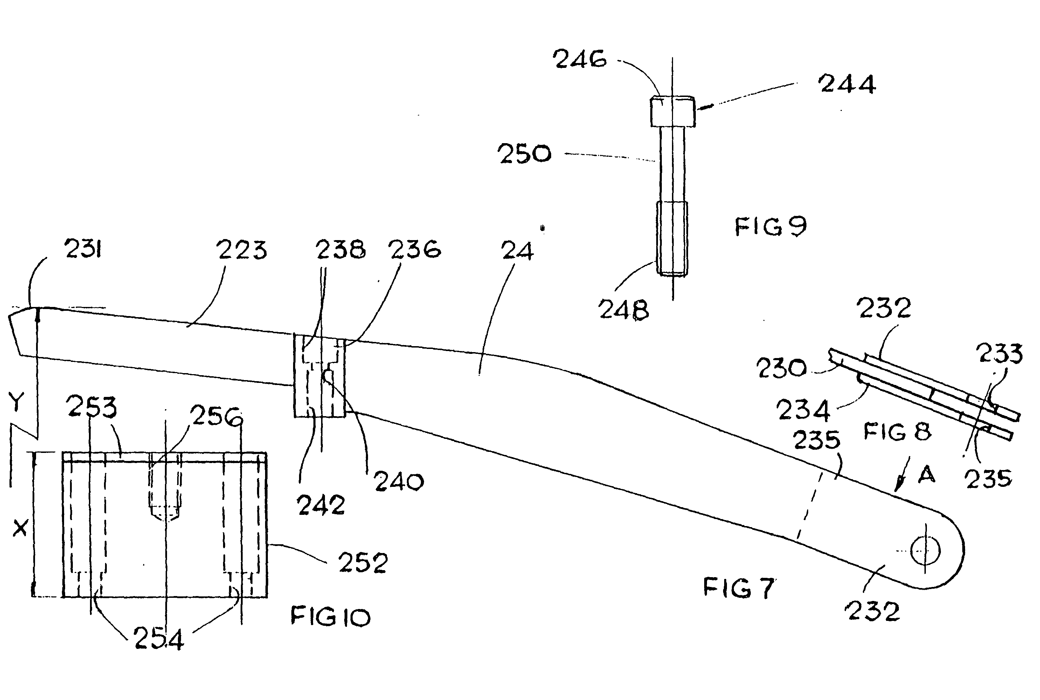

With reference to figures 6-10 there is shown a nose cone welded sub-assembly 210 (see figure 6) which forms part of the front subframe 12 and comprises the circular plate 23, a circular plate 212 and six circumferentially equispaced bracing arms 214 of generally rectangular cross-section (only two are shown). Each bracing arm 214 is welded at one end to plate 23 and at the other end to plate 212.

Plate 23 includes three circumferentially equispaced holes 216 each of which locates a portion of a pneumatic cylinder 320 (only one is shown here). Holes 218 (only one is shown here) additionally allows securing of each pneumatic cylinder 320 to plate 23 via bolts. Plate 23 also has a central hole 220 which allows the passage of services eg. electrical and pneumatic to the welding machine.

Plate 212 includes a central service hole (not shown) and various securing holes (not shown) to secure the command rod coupling 85 to the plate 212.

The radially outer edge 222 of each bracing arm 214 together form a conically shaped cage. Each bracing arm 214 includes a pivot hole 224 and threaded hole 226.

Attached via a pin (not shown) to each bracing arm 214 is a guide arm 24 of generally rectangular cross section. At one end 230 of guide arm 24 two pivot plates 232 and 234 are welded, one on each side of the guide arm 24. Each pivot plate 232 and 243 projects beyond the end 230 of guide arm 24 and each pivot plate includes an aligned hole 233 and 235. When assemble onto the appropriate bracing arm 214 the pivot plates 232 and 243 sit one on either side of the bracing arm and the pin (not shown) passes through holes 233,224 and 235 to allow pivotal movement of the guide arm 24 relative to the corresponding bracing arm 214 (see figure 1).

Each guide arm 24 includes a boss 236 with a bolt head recess 238, a threaded portion 240 and a bolt shank recess 242.

Bolt 244 includes a head 246, a threaded portion 248 and a waisted portion 250. Bolt 244 is inserted into the boss 236 such that threaded portion 248 is screwed into and through threaded portion 240 of boss 236. This results in head 246 being located in bolt head recess 238 and additionally because the waisted portion 250 is sitting within the threaded portion 240 of the boss 236 the bolt cannot fall out and become lost.

Spacer 252 includes securing holes 254 which are used to secure the spacer 252 to the plate 322 of the thrust assembly 30.

When secures in position the bolt 244 of each guide arm 24 is screwed into hole 256 of spacer 252 such that the radially face 237 of boss 236 abuts the radially outer face 253 of spacer 252.

By varying the height x of each spacer 252 the distance y across the ends 231 of the outer edge 223 of diametrically opposed guide arms 24 may be varied to suit different internal pipe diameters. The ends 231 of the guide arms 24 collectively form a guide diameter.

It will be noted that the outer edges 222 of bracing arms 214 in conjunction with the outer edges 223 of guide arms 24 form a tapering cage. This cage is used to protect those components within the cage when a piece of pipe is being aligned with the end of the pipeline whilst the internal pipe welding machine is in position ready to carry out a welding process.

The spacers 252 are sized such that the new section of pipeline can be guided into position by the guide diameter formed by the ends 231 of the guide arms 24 but also allowing movement of the pipe welding machine 10 along the pipeline once a welding operation has been carried out.

It can be seen from figure 1 that when the guide arms are not within a pipe, one (or more) of the guide arms 24 can be individually pivoted to a position (see figure 1 chain dotted line) whereby the outer edges 235 of pivot plates 232 and 234 abut a bolt head and corresponding nut which have been positioned on opposite sides of threaded hole 226. This allows easy access to various components of the thruster assembly allowing for replacement or repair as appropriate without the removal of the nose cone assembly 20.

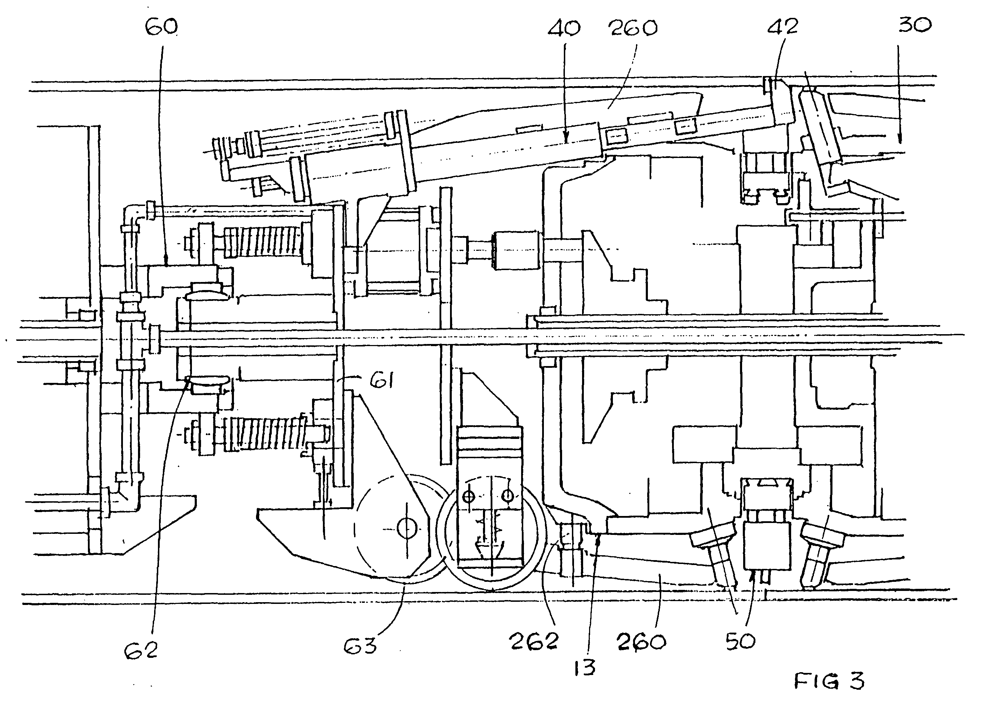

It can be seen from figure 3 that situated behind the welder assemblies 50 there are further guide arms 260 (in this case 6) each being pivotally mounted at its rear portion and together forming a guide diameter which is adjustable in a manner similar to the guide arms 24, different spacers 262 being provided.

The pipe engaging clamps 31A and 31B. the welding torches of each welder assembly 50 and the arrester assemblies 40 all have respective retracted positions which are at a diameter smaller than the guide diameters of the adjacent guide arms.

Thus when the internal pipe welding machine is being loaded into a pipe line ie. the back of the machine is being inserted first with the loading wheels 63 acting to assist loading, the guide arms 260 act to prevent damage of the clamps, welding torches, and arrester assemblies.

Similarly when a pipe is being positioned relative to the pipe line the front guide arms 24 prevent damage to the welding torches and front pipe engaging clamps.

Should failure of one or more of the automatic welder assemblies 50 occur, one method of completing the weld would be for an operator to reverse the pipe welding machine using the command rod control panel such that the manual welding torch 21 is adjacent the weld to be repaired. The operator then crawls along the pipeline and once at the pipe joint, can effect a weld repair by using the manual welding torch 21. Advantageously the welding settings of the manual welding torch 21, eg. the weld current and the wire feed speed are controlled by one of the control arrangements used to control the settings on one of the automatic welder assemblies 50. Thus no additional control arrangement and control apparatus is required for the manual welding torch 21.

In particular a welding current lead can be connected between a welding current terminal of one of the automatic welder assemblies and the manual welding torch, the welding current terminal being connected via the command rod to a rectifier situated on a support vehicle proximate the open end of the pipe, the rectifier acting to convert alternating current (AC) electrical power supplied from a generator into direct current (DC) electrical power suitable for welding.

Thus operation of the particular welder assembly during normal welding or operation of the manual welding torch during manual repair welding as appropriate, will utilise the same rectifier, thus minimising the total number of rectifiers required.

Furthermore when a repair weld is carried out on a portion of the joint, the settings used to repair that portion are the same as the settings used to previously weld the rest of that joint by the automatic welder assemblies. This provides for a uniform weld and therefore a good joint.

## Claims

1. A pipe welding machine (10) including at least one automatic welder assembly (50) controlled by a control arrangement, **characterized in that** the pipe welding machine also includes a manual welder, (19 ; 21, 22) the control of at least one of the wire feed speed and welding current of the manual welder (19, 21, 22) being provided by the control arrangement.

2. A pipe welding machine as defined in claim 1 in which the control arrangement includes a rectifier for supplying weld current to the automatic welder assembly the rectifier also supplying weld current to the manual welder in use.

## Patentansprüche

1. Eine Rohrschweißmaschine (10) mit wenigstens einem automatischen, durch eine Kontroll-Anordnung kontrollierten bzw. gesteuerten Schweißgerät (50),
**dadurch gekennzeichnet, dass** die Rohr-Schweißmaschine ein Hand-Schweißgerät (19, 21, 22) aufweist, wobei die Steuerung bzw. Regelung der Schweißdraht-Zufuhrgeschwindigkeit und/oder der Schweiß-Spannung des Hand-Schweißgerätes (19, 21, 22) durch die Kontroll- Anordnung des automatischen Schweißgeräts (50) erfolgt.

2. Eine Rohrschweißmaschine nach Anspruch 1, wobei die Kontroll-Anordnung bzw. das Steuergerät einen Gleichrichter zur Zufuhr von Schweißspannung zu dem automatischen Schweißgerät aufweist, der auch den Schweißstrom zum Betrieb des Handschweißgeräts liefert.

## Revendications

1. Machine de soudage de conduites comprenant au moins une unité automatique de soudage (50) commandée par un ensemble de commande **caractérisé en ce que** la machine de soudage de conduites comprend également un poste de soudage manuel (19, 21, 22), la commande de la vitesse d'alimentation d'au moins un des fils et du courant de soudage du poste de soudage manuel étant assurée par l'ensemble de commande.

2. Machine de soudage de conduites selon la revendication 1 dans laquelle l'ensemble de commande comprend un redresseur pour l'alimentation en courant de soudage à l'unité de soudage automatique, le redresseur fournissant également en fonctionnement le courant de soudage au poste de soudage manuel.
